# EUROPEAN PATENT APPLICATION

(11) **EP 4 553 774 A1**
(43) Date of publication of application: **14.05.2025**
(21) Application number: 23834755.3
(22) Date of filing: 30.06.2023
(51) Int. Cl.: G06T 11/60

(54) **IMAGE PROCESSING METHOD AND APPARATUS, ELECTRONIC DEVICE, MEDIUM, AND PROGRAM PRODUCT**

(30) Priority: 06.07.2022 CN 202210798152
(71) Applicant: Beijing Zitiao Network Technology Co., Ltd., Beijing 100190 (CN)
(72) Inventor: LIN, Shuchao, Beijing 100028 (CN); ZHANG, Xinghua, Beijing 100028 (CN); HAN, Xuyue, Beijing 100028 (CN); WANG, Shihan, Beijing 100028 (CN); YANG, Rongtao, Beijing 100028 (CN)
(74) Representative: Dentons UK and Middle East LLP
(86) International application number: PCT/CN2023/104745
(87) International publication number: WO 2024/007988

(57) **Abstract**

The present application relates to an image processing method and apparatus, an electronic device, a medium, and a program product, applied to the technical field of the Internet. The method comprises: obtaining an image to be processed; obtaining a target effect material matching the image to be processed; on the basis of the target effect material, rendering the image to be processed to generate a dynamic image corresponding to the image to be processed; automatically displaying the dynamic image; and in response to a click operation for the dynamic image, generating and displaying video content.

## Description

### CROSS-REFERENCE TO RELATED APPLICATIONS

The present application claims priority to and is based on a Chinese application with an application number 202210798152.5 and a filing date of July 06, 2022, the aforementioned application is hereby incorporated by reference in its entirety.

### FIELD OF THE INVENTION

The present application relates to the field of Internet technology, and in particular to an image processing method, apparatus, electronic device, medium and program product.

### BACKGROUND

At present, in the mainstream content ecology of the Internet, the video ecology is more popular with users. Users can generate video content and contribute it to the video ecosystem through the video content.

### DISCLOSURE OF THE INVENTION

In order to solve or at least partially solve the above technical problems, the present disclosure provides an image processing method, apparatus, electronic device, medium and program product.

According to a first aspect of the present disclosure, there is provided an image processing method, comprising:
acquiring an image to be processed;
acquiring a target effect material matching the image to be processed;
rendering the image to be processed based on the target effect material to generate a dynamic image corresponding to the image to be processed;
automatically presenting the dynamic image;
generating and presenting video content, in response to a click operation on the dynamic image.

According to some embodiments of the present disclosure, the acquiring an image to be processed may include:
when a preview operation for a currently shot image is detected, acquiring the currently shot image and using the currently shot image as the image to be processed;
the automatically presenting the dynamic image may include:
   automatically presenting the dynamic image on a preview interface for the currently shot image.

According to some embodiments of the present disclosure, the acquiring an image to be processed may include:
when it is detected that an album interface is entered, acquiring a preset number of images closest to the current moment, and using at least one of the acquired preset number of images as the image to be processed;
the automatically presenting the dynamic image may include:
   automatically presenting at least one dynamic image on the album interface.

According to some embodiments of the present disclosure, the acquiring a target effect material matching the image to be processed may include:
selecting the target effect material from effect materials in a material library according to usage condition information of the effect materials; and/or
performing image recognition on the image to be processed to obtain feature information of the image to be processed;
based on the feature information of the image to be processed, acquiring the target effect material matching the image to be processed.

According to some embodiments of the present disclosure, the usage condition information may include: the last usage time and/or the number of usages; the selecting the target effect material from effect materials in a material library according to usage condition information of the effect materials may include:
sorting the effect materials in the material library according to the last usage time, to obtain a first sorting result;
sorting the effect materials in the material library according to the number of usages to obtain a second sorting result;
selecting the target effect material from the effect materials, according to the first sorting result and/or the second sorting result.

According to some embodiments of the present disclosure, the rendering the image to be processed based on the target effect material to generate a dynamic image corresponding to the image to be processed, may include:
reading a single target effect material;
setting a rendering timestamp for the target effect material;
creating material texture corresponding to the target effect material;
creating image texture corresponding to the image to be processed;
performing texture blending of the material texture and the image texture, in conjunction with a rendering timestamp, to generate a dynamic image corresponding to the image to be processed.

According to some embodiments of the present application, the generating video content, in response to a click operation on the dynamic image, may include:
acquiring audio data, and decoding the audio data, to obtain pulse code modulation data;
decoding the image to be processed to obtain original image data, and creating texture corresponding to the original image data;
creating the material texture corresponding to the target effect material;
synthesizing the texture corresponding to the original image data and the material texture corresponding to the target effect material to obtain synthesized texture;
synthesizing and encoding the synthesized texture and the pulse code modulation data, to generate the video content.

According to a second aspect of the present disclosure, an image processing apparatus is provided, which may include:
a to-be-processed image acquisition module configured to acquire an image to be processed;
a target effect material acquisition module configured to acquire a target effect material matching the image to be processed;
a dynamic image generation module configured to render the image to be processed based on the target effect material to generate a dynamic image corresponding to the image to be processed;
a dynamic image presentation module configured to automatically present the dynamic image;
a video content generation module configured to generate video content in response to a click operation on the dynamic image; and
a video content presentation module configured to present the video content.

According to some embodiments of the present disclosure, the to-be-processed image acquisition module may be further configured to, when a preview operation for a currently shot image is detected, acquire the currently shot image and use the currently shot image as the image to be processed;
the dynamic image presentation module may be further configured to automatically present the dynamic image on a preview interface for the currently shot image.

According to some embodiments of the present disclosure, the to-be-processed image acquisition module may be further configured to, when it is detected that an album interface is entered, acquire a preset number of images closest to the current moment, and use at least one of the acquired preset number of images as the image to be processed;
the dynamic image presentation module may be further configured to automatically present at least one dynamic image on the album interface.

According to some embodiments of the present disclosure, the target effect material acquisition module may be configured to select the target effect material from effect materials in a material library according to usage condition information of the effect materials; and/or perform image recognition on the image to be processed to obtain feature information of the image to be processed, and based on the feature information of the image to be processed, acquire the target effect material matching the image to be processed.

According to some embodiments of the present disclosure, the usage condition information may include: the last usage time and/or the number of usages; the target effect material acquisition module may be configured to select the target effect material from effect materials in a material library according to usage condition information of the effect materials by the following steps:
sorting the effect materials in the material library according to the last usage time, to obtain a first sorting result;
sorting the effect materials in the material library according to the number of usages to obtain a second sorting result;
selecting the target effect material from the effect materials, according to the first sorting result and/or the second sorting result.

According to some embodiments of the present disclosure, the dynamic image generation module may be further configured to read a single target effect material; set a rendering timestamp for the target effect material; create material texture corresponding to the target effect material; create image texture corresponding to the image to be processed; perform texture blending of the material texture and the image texture, in conjunction with a rendering timestamp, to generate a dynamic image corresponding to the image to be processed.

According to some embodiments of the present application, the video content generation module may be further configured to acquire audio data, and decode the audio data, to obtain pulse code modulation data; decode the image to be processed to obtain original image data, and create texture corresponding to the original image data; create the material texture corresponding to the target effect material; synthesize the texture corresponding to the original image data and the material texture corresponding to the target effect material to obtain synthesized texture; synthesize and encode the synthesized texture and the pulse code modulation data, to generate the video content.

According to a third aspect of the present disclosure, an electronic device is provided, comprising: a processor and a memory, wherein the memory stores computer programs and/or instructions, which, when executed by the processor, cause the method described in the first aspect of the present disclosure to be implemented.

According to a fourth aspect of the present disclosure, a computer-readable storage medium is provided, on which computer programs and/or instructions are stored, the computer programs and/or instructions, when executed by a processor, cause the method described in the first aspect of the present disclosure to be implemented.

According to a fifth aspect of the present disclosure, a computer program product is provided, comprising computer programs and/or instructions, which, when running on a computer, cause the computer to execute the method described in the first aspect of the present disclosure.

According to a sixth aspect of the present application, a computer program is provided, comprising program codes, which, when executed by a processor, cause the method described in the first aspect of the present disclosure to be implemented.

### DESCRIPTION OF THE DRAWINGS

The accompanying drawings, which are incorporated in and constitute a part of this specification, illustrate embodiments according to the present disclosure, and together with the description, serve to explain the principles of the present disclosure.

In order to more clearly illustrate the technical solutions in the embodiments of the present disclosure or related technologies, the drawings required for use in the embodiments or related technical descriptions are briefly introduced below, and it is obvious for ordinary skilled in the art that other drawings can be derived based on these drawings without paying any creative labor.
FIG. 1 is a schematic diagram showing a system architecture of an exemplary application environment which is appliable to an image processing method according to an embodiment of the present disclosure;
FIG. 2 is a schematic diagram of an image processing method according to an embodiment of the present disclosure;
FIG. 3 is a flow chart of an image processing method according to an embodiment of the present disclosure;
FIG. 4 is a flow chart of generating a dynamic image according to an embodiment of the present disclosure;
FIG. 5 is a schematic scenario diagram of generating a dynamic image according to an embodiment of the present disclosure;
FIG. 6 is a schematic structural diagram of an image processing apparatus according to an embodiment of the present disclosure;
FIG. 7 is a schematic structural diagram of an electronic device according to an embodiment of the present disclosure.

### DETAILED DESCRIPTION OF PREFERRED EMBODIMENTS

In order to more clearly understand the above objects, features and advantages of the present disclosure, the scheme of the present disclosure will be further described below. It should be noted that, in the absence of conflict, the embodiments of the present disclosure and the features therein may be combined with each other.

In the following description, many specific details are set forth to facilitate a full understanding of the present disclosure, but the present disclosure may also be implemented in other ways different from those described herein; it is obvious that the embodiments in the specification are only part of the embodiments of the present disclosure, rather than all of the embodiments.

In Internet applications, many users share their work and life by producing videos and uploading them to a social platform (such as a short video platform, etc.). For example, a user may use a camera shooting application to shoot images and/or videos, edit the images and/or videos, generate a video using a video production tool, and then upload the video to a social platform.

However, in camera shooting applications, since the video content is more likely to attract other users, most of contents shot by users through the camera shooting applications are image contents. Moreover, after having shot the images, the user usually just stores the images locally, and the communication value of the image contents is low. Although users can generate video content based on the image contents, the communication value of image contents produced by camera shooting applications is still relatively low.

In order to solve the above problems, the embodiments of the present disclosure provide an image processing method, apparatus, electronic device, medium and program product, to improve the conversion rate from images to videos, since video ecology is more popular with users, the communication value of image contents shot by the camera shooting applications can be improved.

In particular, in some embodiments of the present disclosure, for images to be processed in camera shooting applications (such as images shot by users in real time, or images stored in albums, etc.), target effect materials matching the images to be processed can be acquired, and based on the target effect materials, the images to be processed can be rendered to generate dynamic images corresponding to the images to be processed. Compared with static images to be processed, dynamic images are more vivid. By automatically presenting the dynamic images, users can be guided to generate video contents based on the images to be processed, thereby improving the conversion rate from images to videos. Since video ecology is more popular with users, the communication value of image contents shot by the conventional camera shooting applications can be improved, by improving the conversion rate from images to videos.

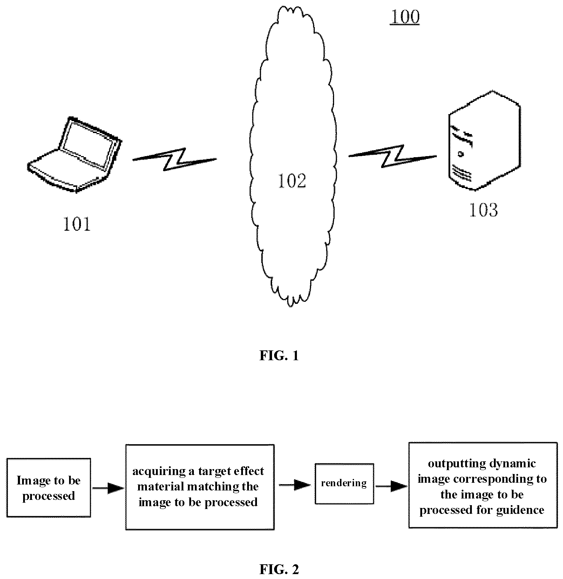

Referring to FIG. 1, which is a schematic diagram showing a system architecture of an exemplary application environment which is appliable to an image processing method according to an embodiment of the present application. The system architecture 100 includes: a terminal device 101, a network 102 and a server 103. The network 102 is used to provide a medium for a communication link between the terminal device 101 and the server 103. The network 102 may include various connection types, such as wired, wireless communication links, or fiber optic cables, among others. The terminal device 101 includes but is not limited to a desktop computer, a portable computer, a smart phone, a tablet computer, and the like. The terminal device 101 may be installed with a camera shooting application, and the user may use the camera shooting application to shoot images or videos and may also view the images or videos in an album. The server 103 may be a server corresponding to the camera shooting application.

It should be understood that the number of terminal devices, networks and servers in FIG. 1 is merely illustrative. Depending on implementation requirements, there can be any number of terminal devices, networks, and servers. For example, the server 103 may be a server cluster composed of multiple servers.

The image processing method provided in an embodiment of the present disclosure can be executed by a camera shooting application in the terminal device 101. For example, a user uses a camera shooting application in the terminal device 101 to shoot an image, and the image is an image to be processed. The camera shooting application can acquire the image to be processed from the terminal device 101, and acquire a target effect material matching the image to be processed from a local material library of the terminal device 101 and/or the server 103, where the target effect material is an effect material used to generate dynamic images. Based on the target effect material, the image to be processed can be rendered to generate a dynamic image corresponding to the image to be processed. By automatically presenting the dynamic image, users can be guided to generate corresponding video content based on the image to be processed.

Referring to FIG. 2, which is a schematic diagram of an image processing method according to an embodiment of the present disclosure. It can be seen that by generating a dynamic image corresponding to the image to be processed and automatically presenting the dynamic image, the user can be guided to generate the video content based on the image to be processed, thereby improving the conversion rate from the image to the video. Thereby, the communication value of the image to be processed can be improved.

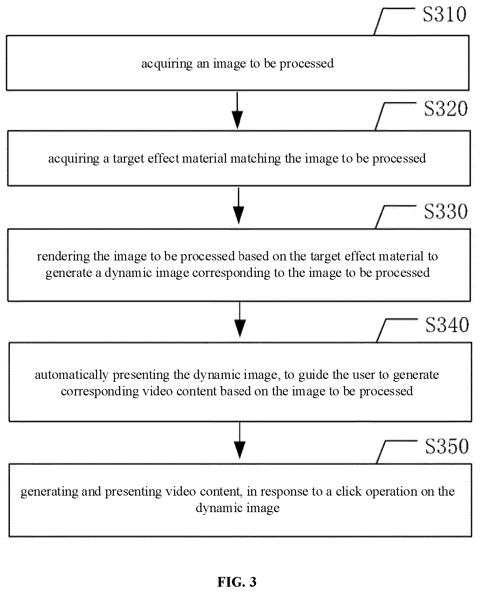

Referring to FIG. 3, FIG. 3 is a flow chart of an image processing method according to an embodiment of the present disclosure, which may include the following steps:
Step S310, acquiring an image to be processed;
Step S320, acquiring a target effect material matching the image to be processed;
Step S330, rendering the image to be processed based on the target effect material to generate a dynamic image corresponding to the image to be processed;
Step S340, automatically presenting the dynamic image;
Step S350, generating and presenting video content, in response to a click operation on the dynamic image.

In the image processing method of the embodiment of the present application, for images to be processed in camera shooting applications (such as images shot by users in real time, or images stored in albums, etc.), target effect materials matching the images to be processed can be acquired, and based on the target effect materials, the images to be processed can be rendered to generate dynamic images corresponding to the images to be processed. Compared with static images to be processed, dynamic images are more vivid, by automatically presenting the dynamic images, users can be guided to generate video contents based on the images to be processed, thereby improving the conversion rate from images to videos. Since video ecology is more popular with users, the communication value of image contents shot by the conventional camera shooting applications can be improved, by improving the conversion rate from images to videos.

The image processing method of the embodiment of the present disclosure will be introduced in more detail below.

In step S310, acquiring an image to be processed.

For a camera shooting application, its core usage path is for users to shoot images and preview shooting effects of the images. In some embodiments, the image to be processed may be an image shot by a user through a camera shooting application in real time. when a preview operation for a currently shot image is detected, the currently shot image can be acquired and the currently shot image can be used as the image to be processed.

In addition, the user can also enter an album interface of the camera shooting application to edit the images they have shot. In some embodiments, when it is detected that the album interface is entered, a preset number of images closest to the current moment can be acquired, and at least one of the acquired preset number of images can be used as the image to be processed. The preset number can be 1 or an integer greater than 1. For example, eight images closest to the current moment may be acquired, that is, eight images to be processed may be acquired. For another example, the eight images closest to the current moment may be acquired, and then several images may be selected from them, for example, randomly selected, or selected according to time sequence, image attributes, and the like, as the images to be processed. When multiple images to be processed are acquired, the same processing process may be performed for each image to be processed.

In step S320, acquiring a target effect material matching the image to be processed.

A developer of the camera shooting application can generate effect materials through an effect editing tool (i.e., editor) for usage by users. Types of effect materials include: filters, makeup, special effects, animations, stickers, text, audio, etc. In this way, when a user shoots an image, the user can directly select the effect material that the user is interested in, and generate an image containing the effect material. Alternatively, after having shot an image, the image can be edited to generate an image containing the effect material.

The target effect material is an effect material that matches the image to be processed. Each terminal device may have a corresponding local material library, which stores a variety of effect materials. For example, when a user edits an image, the user may first download the effect material and then use the effect material, the downloaded effect material may be stored in a local material library. It can be understood that the material library can be continuously updated. For effect materials in the material library, users can use them directly next time, without needing to download from Internet. In some embodiments, With the authorization of the user, usage condition information of each effect material in the material library may be acquired, and a target effect material may be selected from effect materials in the material library according to the usage condition information of effect materials.

According to some embodiments of the present application, the usage condition information of a single effect material includes, but is not limited to: the last time the effect material was used and/or the number of times the effect material was used. According to the usage condition information of each effect material in the material library, the effect materials can be sorted according to the last usage time to obtain a first sorting result. For example, the effect materials can be sorted in order of the last usage time from far to near. The higher the order of the effect material is, the closer the last usage time of the effect material is to the current time.

Similarly, the effect materials in the material library may be sorted according to the number of times they are used to obtain a second sorting result. For example, the effect materials can be sorted in descending order of the number of usage, to obtain the second sorting result. The higher the order of the effect material is, the more times users use the effect material, and the more users like the effect material.

Afterwards, according to the first sorting result and/or the second sorting result, a target effect material is selected from the effect materials. For example, the first N1 effect materials may be selected from the first sorting result, the first N2 effect materials may be selected from the second sorting result, and an intersection between the first N1 effect materials and the first N2 effect materials may be selected as the target effect material. Alternatively, a union of the first N1 effect materials and the first N2 effect materials may be selected as the target effect material.

In some embodiments, it is also possible to, from the effect materials in the material library, select effect materials whose last use time is less than a preset time period (for example, within one week) from the current time, and select effect materials whose number of usage is greater than a preset number of times (for example, 5 times, etc.), and then select the intersection of the two as the target effect material, etc.

In addition to acquire the target effect material from the material library, with the user's permission, image recognition can be performed on the image to be processed to obtain feature information of the image to be processed. For example, according to characteristics of the camera shooting application, the shot images can generally be classified into three categories: portraits, scenery, and articles, and can be refined according to image features, portrait features can be classified into gender features, appearance features, age features, etc.; scenery features can be classified into urban building features, meteorological features, plant features, etc.; object features can be refined into interest features, etc. For example, if the object contained in the image is a football, then it can be analyzed that the user may be interested in sports, thereby obtaining interest features. Based on the feature information of the image to be processed, target effect materials matching the image to be processed can be acquired. For example, the target effect material can be acquired from the cloud, effect materials on the cloud can be configured by operators and may include effect materials pre-configured according to network hotspots, holidays, etc., which can be updated as network hotspots and holidays change, and are highly flexible.

In step S330, rendering the image to be processed based on the target effect material to generate a dynamic image corresponding to the image to be processed.

In an embodiment of the present application, the target effect material can be directly used to render the image to be processed. The processed image can also be rendered according to a video template, the video template can be a template generated by a video creator during a video production process, the video template can contain a variety of different effect materials, other users can use the video template to generate video contents with different content but similar form.

After having acquired the target effect material, a video template that matches the target effect material can be acquired. Since one or more effect materials may be used in a single video template, a corresponding relationship between video template and effect material can be established, and one video template can correspond to one or more effect materials. Based on the corresponding relationship, a video template corresponding to the target effect material, that is, a video template matching the target effect material, can be obtained. Based on the target effect material and the video template, the image to be processed can be rendered by a rendering tool (such as OpenGL) to generate a dynamic image corresponding to the image to be processed.

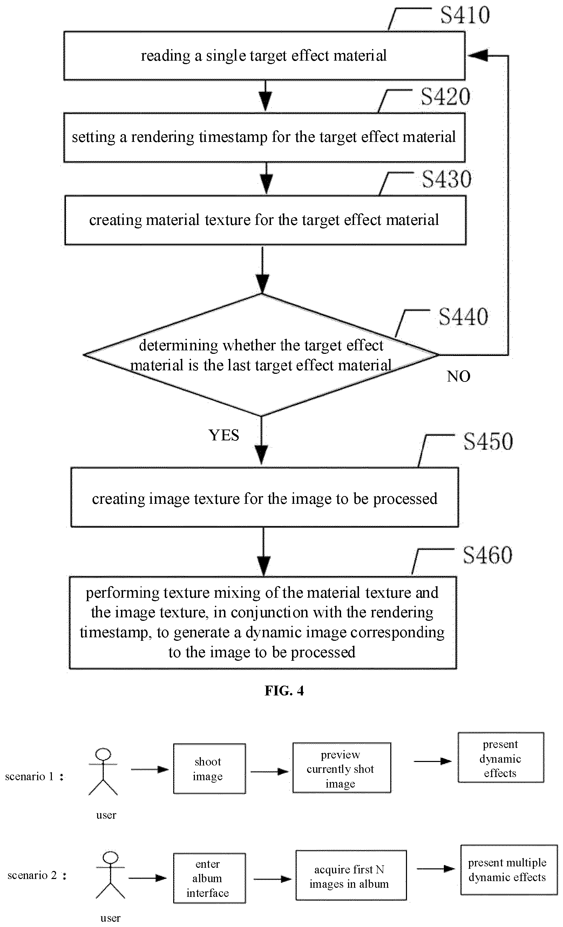

Since the rendering of dynamic images includes multiple frames, the material information contained in the dynamic images can be added with the concept of time intervals. Therefore, a material dynamic image rendering protocol can be designed. The material dynamic image rendering protocol may include relevant texture parameters, such as rendering width, rendering height, rendering level, rendering start timestamp, rendering end timestamp, etc. According to the material dynamic image rendering protocol, the process of generating a dynamic image is shown in FIG. 4 and may include the following steps:
Step S410, reading a single target effect material.
Step S420, setting a rendering timestamp for the target effect material.
Step S430, creating material texture corresponding to the target effect material.
   In an embodiment of the present disclosure, the texture parameters of the target effect material can be set according to the material dynamic image rendering protocol, for example, texture width, texture height, texture transparency, etc. can be set.
Step S440, determining whether the target effect material is the last target effect material.
   If the target effect material is the last target effect material, execute step S450; otherwise, return to step S410, read the next target effect material, and repeat the above steps, until the last target effect material is processed.
Step S450, creating image texture corresponding to the image to be processed.
Step S460, performing texture mixing of the material texture and the image texture, in conjunction with the rendering timestamp, to generate a dynamic image corresponding to the image to be processed.

For example, there are two target effect materials, namely, filter and particle animation, according to the above method, the following can be executed sequentially: creating the material texture of the filter, such as setting texture parameters, and setting a rendering timestamp for the filter, creating the material texture of the particle animation, such as setting texture parameters, and setting a rendering timestamp for the particle animation, and finally converting the image into particle animation with filter effects.

In step S340, automatically presenting the dynamic image, to guide the user to generate corresponding video content based on the image to be processed.

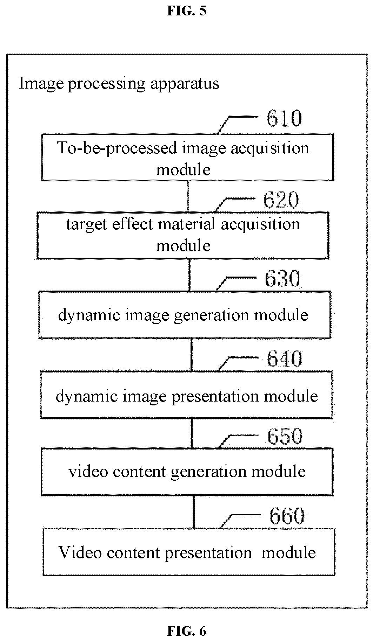

If the image to be processed is a currently shot image, the dynamic image can be automatically presented on the preview interface of the currently shot image. For example, the dynamic image can be presented in manner of pop-up or jump. If the image to be processed is an image in an album, multiple dynamic images can be automatically presented in the album interface. For example, multiple dynamic images can be presented at the top of the album interface. Referring to FIG. 5, which is a schematic scenario diagram of generating a dynamic image according to an embodiment of the present disclosure, which may include two scenarios: a scenario in which the user directly shoots an image through a camera shooting application, and a scenario in which the user enters the album interface. Depending on different scenarios, the dynamic image can be presented to the user to guide the users to generate the video content.

In step S350, generating and presenting video content, in response to a click operation on the dynamic image.

After presenting the dynamic image, video content may be generated and presented in response to a click operation (such as a single click operation or a double click operation, etc.) on the dynamic image. For the dynamic images respectively corresponding to the multiple images to be processed, the user can slide and select a dynamic image that the user is interested in from the multiple dynamic images to generate corresponding video content. It can be seen that the process of generating video content is simple and fast, and users can experience it directly without the need of secondary operations.

It should be noted that the method of generating video content is different from the aforementioned method of generating dynamic images. The decoding of the video data stream is relatively higher complexity compared to the image. Therefore, the process of generating video content is relatively complicated. In some embodiments, audio data (e.g., audio data configured in the background) may be acquired and decoded to obtain pulse code modulation (PCM) data. The image to be processed may be decoded to obtain original image data (e.g., RGBA data), and the texture corresponding to the original image data is created. The material texture corresponding to the target effect material can be created, the texture corresponding to the original image data and the material texture corresponding to the target effect material can be synthesized to obtain the synthesized texture. The synthetic texture and pulse code modulation data are synthesized and encoded to generate the video content.

The image processing method of an embodiment of the present disclosure provides a dynamic image for image-to-video conversion through local real-time rendering when the user triggers local image generation or enters the album interface, thereby guiding the user to generate corresponding video content. By combining the characteristics of camera shooting applications, cloud services, and image features, it is possible to provide users with various effect materials, improve the richness and diversity of image to video conversion, and achieve the goal of further improving video conversion. Through the above guidance, the conversion rate of the user converting images into videos can be improved. In addition, users can directly click on the dynamic image to easily and quickly generate the corresponding video content. Since video ecology is more popular with users, the communication value of image contents produced by the camera shooting applications can be improved.

Corresponding to the above method embodiments, an embodiment of the present disclosure further provides an image processing apparatus. Referring to FIG.6, the image processing apparatus 600 may include:
a to-be-processed image acquisition module 610 configured to acquire an image to be processed;
a target effect material acquisition module 620 configured to acquire a target effect material matching the image to be processed;
a dynamic image generation module 630 configured to render the image to be processed based on the target effect material to generate a dynamic image corresponding to the image to be processed;
a dynamic image presentation module 640 configured to present the dynamic image to guide a user to generate corresponding video content based on the image to be processed;
a video content generation module 650 configured to generate video content in response to a click operation on the dynamic image; and
a video content presentation module 660 configured to present the video content.

According to some embodiments of the present disclosure, the to-be-processed image acquisition module 610 may be further configured to, when a preview operation for a currently shot image is detected, acquire the currently shot image and use the currently shot image as the image to be processed;
the dynamic image presentation module 640 may be further configured to automatically present the dynamic image on a preview interface for the currently shot image.

According to some embodiments of the present disclosure, the to-be-processed image acquisition module 610 may be further configured to, when it is detected that an album interface is entered, acquire a preset number of images closest to the current moment, and use at least one of the acquired preset number of images as the image to be processed;
the dynamic image presentation module 640 may be further configured to automatically present at least one dynamic image on the album interface.

According to some embodiments of the present disclosure, the target effect material acquisition module 620 may be configured to select the target effect material from effect materials in a material library according to usage condition information of the effect materials; and/or perform image recognition on the image to be processed to obtain feature information of the image to be processed, and based on the feature information of the image to be processed, acquire the target effect material matching the image to be processed, and/or effect materials pre-configured according to network hotspots or holidays.

According to some embodiments of the present disclosure, the usage condition information may include: the last usage time and/or the number of usages; the target effect material acquisition module 620 may be further configured to select the target effect material from effect materials in a material library according to usage condition information of the effect materials by the following steps:
sorting the effect materials in the material library according to the last usage time, to obtain a first sorting result;
sorting the effect materials in the material library according to the number of usages, to obtain a second sorting result;
selecting the target effect material from the effect materials, according to the first sorting result and/or the second sorting result.

According to some embodiments of the present disclosure, the dynamic image generation module 630 may be further configured to read a single target effect material; set a rendering timestamp for the target effect material; create material texture corresponding to the target effect material; create image texture corresponding to the image to be processed; perform texture blending of the material texture and the image texture, in conjunction with the rendering timestamp, to generate a dynamic image corresponding to the image to be processed.

According to some embodiments of the present application, the video content generation module 650 may be further configured to acquire audio data, and decode the audio data, to obtain pulse code modulation data; decode the image to be processed to obtain original image data, and create texture corresponding to the original image data; create the material texture corresponding to the target effect material; synthesize the texture corresponding to the original image data and the material texture corresponding to the target effect material to obtain synthesized texture; synthesize and encode the synthesized texture and the pulse code modulation data, to generate the video content.

The specific details of each module or unit in the above apparatus have been described in detail in the corresponding method, which will not be repeated here.

It should be noted that although several modules or units of the apparatus for action execution have been mentioned in the above detailed description, such division is not mandatory. In fact, according to the embodiments of the present application, the features and functions of two or more modules or units described above may be embodied in one module or unit. On the contrary, the features and functions of one module or unit described above may be further divided into multiple modules or units to be embodied.

In an exemplary embodiment of the present application, an electronic device is also provided, comprising: a processor, and a memory which stores instructions executable by the processor, wherein the processor may be configured to execute the executable instructions, for implementing the image processing method according to embodiments of the present disclosure.

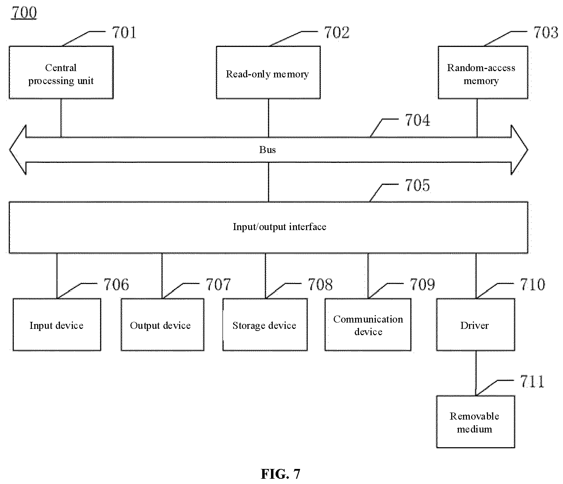

FIG. 7 is a schematic structural diagram of an electronic device according to an embodiment of the present disclosure, in which the image processing solutions according to embodiments of the present disclosure can be implemented. It should be noted that the electronic device 700 shown in FIG. 7 is merely an example and should not impose any limitation on the functions and scopes of use of the embodiments of the present disclosure.

As shown in FIG. 7, the electronic device 700 can include a central processing unit (CPU) 701, which can perform various appropriate actions and processes according to a program stored in a Read Only Memory (ROM) 702 or a program loaded into a Random Access Memory (RAM) 703 from a storage device 708. In the RAM 703, various programs and data required for the operation of the electronic device 700 are also stored. The processing device 701, ROM 702 and RAM 703 are connected to each other through a bus 704. An input/output (I/O) interface 705 is also connected to the bus 704.

Generally, the following components can be connected to the I/O interface 705: an input device 706 including, for example, keyboard, mouse, etc.; an output device 707 such as Cathode Ray Tube (CRT), Liquid Crystal Display (LCD), speakers, etc.; a storage device 708 including a hard disk, etc; and a communication device 709 including network interface card such as Local Area Network (LAN), modem, etc. The communication device 709 may perform communication processing via a network such as Internet. The driver 710 can connect to I/O interface 705 as required. Removable medium 711, such as magnetic disk, optical disk, Magneto optical disk, semiconductor storage, etc., can be installed on the driver 710 as required, so that the computer programs red from the medium can be installed into the storage device 708 as required.

Particularly, according to embodiments of the present disclosure, the process described above with reference to the flowchart can be implemented as a computer software program. For example, an embodiment of the present disclosure includes a computer program product including computer programs carried on a computer readable medium, the computer programs containing program codes for executing the methods shown in the flowchart. In such an embodiment, the computer program can be downloaded and installed from the network through the communication device 709, or installed from the removable medium 711. When executed by the central processing unit 701, the computer program carries out the above-mentioned functions defined in the apparatus of the present disclosure.

In embodiments of the present disclosure, a computer readable storage medium is provided, the computer readable storage medium storing computer programs thereon, which when executed by a processor cause the image processing method described above to implement.

It should be noted that the computer-readable storage medium shown in the present disclosure can be, for example, but not limited to, an electrical, magnetic, optical, electromagnetic, infrared, or semiconductor system, apparatus or equipment, or any combination of the above. More specific examples of computer-readable storage media may include, but are not limited to, an electrical connection having one or more conductors, a portable computer disk, a hard disk, a random access memory, a read-only memory, an erasable programmable read-only memory (EPROM or flash memory), optical fiber, a portable compact disk read-only memory (CD-ROM), an optical storage device, a magnetic storage device, or any suitable combination of the foregoing. In the present disclosure, a computer readable storage medium may be any tangible medium that can contain or store a program that can be used by or in connection with an instruction execution system, apparatus, or device. The program codes contained on the computer-readable storage medium may be transmitted using any appropriate medium, including but not limited to: wireless, wire, optical cable, radio frequency, etc., or any suitable combination of the foregoing.

In an embodiment of the present application, a computer program product is also provided, the computer program product, when running on a computer, causes the computer to execute the above-mentioned image processing method.

In an embodiment of the present application, a computer program is further provided, the computer program includes program codes which, when executed by a processor, cause the image processing method described in the embodiments of the present disclosure to be implemented.

It should also be noted that, in this document, relational terms such as "first" and "second", etc. are merely used to distinguish one entity or operation from another entity or operation, and do not necessarily require or imply any actual relationship or order between these entities or operations. Furthermore, the terms "include", "comprise", or any other variations thereof are intended to cover non-exclusive inclusion, such that a process, method, article, or apparatus that includes a list of elements includes not only those elements but also other elements not expressly listed, or also includes elements inherent to such process, method, article, or apparatus. Without more constraints, an element defined by the phrase "comprising a..." does not exclude the existence of other identical elements in the process, method, article or apparatus comprising the element.

The above description is only specific embodiments of the present disclosure, and enables those skilled in the art to understand or implement or use the present application. Various modifications to these embodiments will be readily apparent to those skilled in the art, and the general principles defined herein may be implemented in other embodiments without departing from the spirit or scope of the present application. Thus, the present application will not be limited to the embodiments shown herein but will be accorded the widest scope consistent with the principles and novel features disclosed herein.

## Claims

1. An image processing method, comprising:
acquiring an image to be processed;
acquiring a target effect material matching the image to be processed;
rendering the image to be processed based on the target effect material to generate a dynamic image corresponding to the image to be processed;
automatically presenting the dynamic image;
generating and presenting video content, in response to a click operation on the dynamic image.

2. The method of claim 1, wherein, the acquiring an image to be processed, comprises:
when a preview operation for a currently shot image is detected, acquiring the currently shot image, and using the currently shot image as the image to be processed;
the automatically presenting the dynamic image comprises:
automatically presenting the dynamic image on a preview interface for the currently shot image.

3. The method of claim 1, wherein, the acquiring an image to be processed, comprises:
when it is detected that an album interface is entered, acquiring a preset number of images closest to the current moment, and using at least one of the acquired preset number of images as the image to be processed;
the automatically presenting the dynamic image comprises:
automatically presenting at least one dynamic image on the album interface.

4. The method of claim 1, wherein, the acquiring a target effect material matching the image to be processed, comprises:
selecting the target effect material from effect materials in a material library according to usage condition information of the effect materials; and/or
performing image recognition on the image to be processed to obtain feature information of the image to be processed;
based on the feature information of the image to be processed, acquiring the target effect material matching the image to be processed.

5. The method of claim 4, wherein, the usage condition information comprises: the last usage time and/or the number of usages; and
the selecting the target effect material from effect materials in a material library according to usage condition information of the effect materials, comprises:
sorting the effect materials in the material library according to the last usage time, to obtain a first sorting result;
sorting the effect materials in the material library according to the number of usages to obtain a second sorting result;
selecting the target effect material from the effect materials, according to the first sorting result and/or the second sorting result.

6. The method of claim 1, wherein, the rendering the image to be processed based on the target effect material to generate a dynamic image corresponding to the image to be processed, comprises:
reading a single target effect material;
setting a rendering timestamp for the target effect material;
creating material texture corresponding to the target effect material;
creating image texture corresponding to the image to be processed;
performing texture blending of the material texture and the image texture, in conjunction with a rendering timestamp, to generate a dynamic image corresponding to the image to be processed.

7. The method of claim 1, wherein, the generating video content, in response to a click operation on the dynamic image, comprises:
acquiring audio data, and decoding the audio data, to obtain pulse code modulation data;
decoding the image to be processed to obtain original image data, and creating texture corresponding to the original image data;
creating the material texture corresponding to the target effect material;
synthesizing the texture corresponding to the original image data and the material texture corresponding to the target effect material to obtain synthesized texture;
synthesizing and encoding the synthesized texture and the pulse code modulation data, to generate the video content.

8. An image processing apparatus, comprises:
a to-be-processed image acquisition module configured to acquire an image to be processed;
a target effect material acquisition module configured to acquire a target effect material matching the image to be processed;
a dynamic image generation module configured to render the image to be processed based on the target effect material to generate a dynamic image corresponding to the image to be processed;
a dynamic image presentation module configured to automatically present the dynamic image;
a video content generation module configured to generate video content in response to a click operation on the dynamic image; and
a video content presentation module configured to present the video content.

9. An electronic device, comprising: a processor and a memory, wherein the memory stores computer programs and/or instructions thereon, which, when executed by the processor, cause the method of any one of claims 1-7 to be implemented.

10. A computer-readable storage medium, on which computer programs and/or instructions are stored, the computer programs and/or instructions, when executed by a processor, cause the method of any one of claims 1-7 to be implemented.

11. A computer program product, comprising computer programs and/or instructions, which, when running on a computer, cause the computer to execute the method of any one of claims 1-7.

12. A computer program, comprising program codes, which, when executed by a processor, cause the method of any one of claims 1-7 to be implemented.
